(19) Europäisches Patentamt
European Patent Office
Office européen des brevets

(11) Publication number : **0 321 569 B1**

# (12) EUROPEAN PATENT SPECIFICATION

(45) Date of publication of patent specification : **08.04.92 Bulletin 92/15**

(51) Int. Cl.[5] : **B01D 61/36,** B01D 71/64

(21) Application number : **88900095.6**

(22) Date of filing : **11.12.87**

(86) International application number : **PCT/JP87/00965**

(87) International publication number : **WO 88/04569 30.06.88 Gazette 88/14**

## (54) PROCESS FOR SEPARATING LIQUID MIXTURE.

(30) Priority : **15.12.86 JP 298424/86**

(43) Date of publication of application : **28.06.89 Bulletin 89/26**

(45) Publication of the grant of the patent : **08.04.92 Bulletin 92/15**

(84) Designated Contracting States : **AT BE CH DE FR GB IT LI LU NL SE**

(56) References cited :
**US-A- 3 789 079**
**US-A- 4 307 135**
**CHEMICAL ABSTRACTS, vol. 107, no. 18, 2nd November 1987, page 63, abstract no. 155658x, Columbus, Ohio, US; Q.T. NGUYEN et al.: "Selection of polymer materials for the dehydration of ethanol by pervaporation", & SYNTH. POLYM. MEMBR., PROC. MICRO-SYMP. MACROMOL., 29th 1986 (Pub. 1987), 495-505, & FILE CHEMABS (ESA), no. 107(18)155658, CONFERENCE 07155658**

(73) Proprietor : **MITSUBISHI KASEI CORPORATION**
**5-2, Marunouchi 2-chome Chiyoda-ku**
**Tokyo 100 (JP)**

(72) Inventor : **YANAGA, Yukio**
**2782-12, Negoya, Tsukui-cho**
**Tsukui-gun, Kanagawa 220-02 (JP)**
Inventor : **HAYASHI, Asazi**
**490-13-15, Fukuda**
**Jouetsu-shi, Niigata 942 (JP)**
Inventor : **SAKAI, Shizue**
**40-622, Sakuradai, Midori-ku**
**Yokohama-shi, Kanagawa 227 (JP)**
Inventor : **IMANARA, Toru**
**1-3-2, Morinosato**
**Atsugi-shi, Kanagawa 243-01 (JP)**

(74) Representative : **Woods, Geoffrey Corlett et al**
**J.A. KEMP & CO. 14 South Square Gray's Inn**
**London WC1R 5EU (GB)**

EP 0 321 569 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a separation method for removing water from a liquid mixture by pervaporation using a highly hydrophilic polymeric material.

Removal of water from a mixture with a "make-soluble liquid" is often necessary in industrial fields. Separation methods such as vaporization, freezing, extraction, dialysis and reverse osmosis have been employed selectively depending on the conditions of use.

Examples of water soluble liquids are oxygen-containing organic compounds such as alcohols, phenols, esters, ketones, ethers, aldehydes and organic acids, nitrogen-containing organic compounds such as nitriles, inorganic compounds such as inorganic acids, or mixtures thereof.

Although the methods described above can remove water from the liquid mixture, they are not always suitable for use with azeotropic mixtures or mixtures of components having similar boiling points. Research and development in pervaposation techniques have become vigorous in recent years in view of the energy requirements. Furthermore, since heat resistance, chemical resistance and mechanical strength are also important as well as the separating performance in actual use, a material having a high separation performance while taking into consideration the other properties has been desired.

There are remarkable problems in providing a membrane with the characteristic affinity to a compound to be separated, forming an extremely thin membrane efficiently, often with no pinholes, to obtain a practical separation performance and, further more, keeping endurance against the compounds in a liquid mixture to be separated.

The present inventors have found a polymeric material having excellent heat resistance, chemical resistance, mechanical strength and high separating performance and which has excellent membrane-formation qualities and durability. JP-A-62-114,611 was published on 26 May 1987, between the filing and priority dates of the present application. It discloses the use of certain membranes to remove water vapour from gases. These membranes have the units of formulae (I) and (II) in mol ratios of 70-90:10-30 or the units of formulae (III) and (IV) in mol ratios of 70-90:10-30.

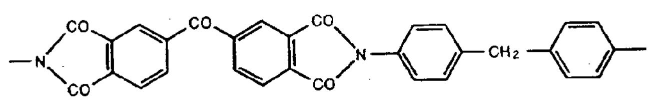
I

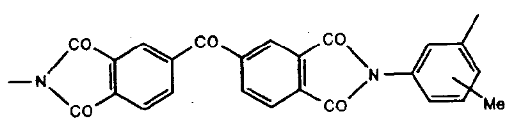
II

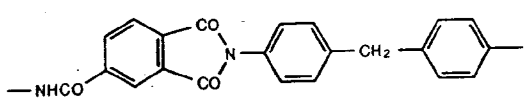
III

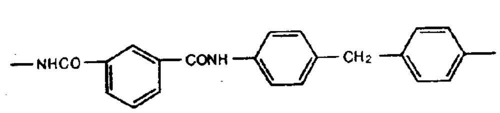
IV

US-A-4,307,135 discloses the use of asymmetric reverse osmosis membranes made from aromatic polyimides. The ratio of polar groups to non-polar groups per imidized nitrogen link in the recurring polymeric unit is from 2:2 to 2:7.

The present invention provides a separation method for removing water from a liquid mixture by pervaporation, which comprises contacting the liquid mixture to one side of an asymmetric membrane while maintaining a gaseous phase on the other side of the membrane, the pervaporation being carried out at atmospheric pressure or above for the liquid mixture, the membrane having been heat treated at a temperature of not less than 250°C and said membrane comprising:

(i) at least 50% by weight of a copolyamide having repeating units of formula (I):

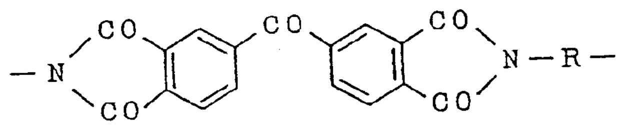

wherein R represents

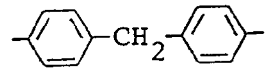

for from 10 to 30 mol% of said repeating units, and R represents

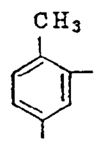

and/or

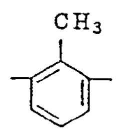

for from 90 to 70 mol% of said repeating units, or

(ii) at least 50% by weight of a copolyamide-imide comprising from 90 to 10 mol% of repeating units of formula (II):

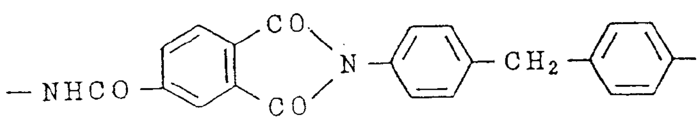

and from 10 to 90 mol% of repeating units of formula (III):

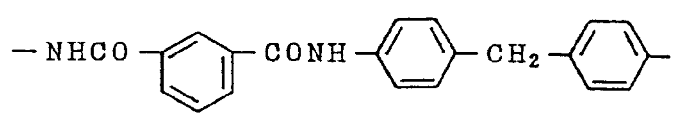

Pervaporation is a method of separating a specific ingredient from a liquid mixture using a polymeric or ceramic membrane. Among the many separation methods, this method is effective for the separation of azeotropic mixtures, for the separation of those ingredients having similar boiling points or for the separation of mixtures containing components with low thermal stability.

In the present invention, water is the component to be separated water can be separated from substantially homogenous liquid mixtures, that is mixtures of various liquids and water no particular restriction in the ratio thereof so long as the mixture is homogenous.

Preferred liquid mixtures are aqueous solutions of oxygen-containing organic compounds such as alcohols, phenols, esters, ketones, ethers, aldehydes and organic acids, nitrogen-containing organic compounds such as nitriles, inorganic compounds such as inorganic acids or mixture thereof.

Examples of alcohols are methanol, ethanol, iso- and normal propanol, butanol, octanol, benzyl alcohol, ethylene glycol, triethylene glycol, glycerin and polyhydric alcohols.

Examples of phenols are cresol, phenol and catechols.

Examples of are water soluble esters such as ethyl acetate, methyl acetate, ethyl formate and methyl propionate.

Examples of are acetone, methyl ethyl ketone and acetophenone.

Examples of are diethyl ether, dibutyl ether, dioctyl ether, diphenyl ether, dioxane, trioxane and tetrahydrofuran.

Examples of aldehydes are formaldehyde and acetoaldehyde.

Examples of organic acids are formic acid, acetic acid, oxalic acid and propionic acid.

Examples of nitriles are acetonitrile and acrylonitrile.

Examples of inorganic acids are hydrochloric acid, sulfuric acid, nitric acid, phosphoric acid and boric acid.

It is considered that the aromatic copolyimide or copolyamide-imide used in the membrane is suitable because the affinity of the imide group and/or amide group with water is effective to selectively separate the water.

However, to obtain a practically useful separating performance it is necessary to form an extremely thin polymeric membrane with no pinholes as described above.

The permeating performance is increased as the thickness of the membrane is reduced, but the separating performance is fatally reduced if pinholes are present. Accordingly, the starting polymeric material has to possess a good membrane-forming property in order to form a nearly ideal membrane, namely the material should, if possible, be soluble at room temperature from a practical point of view. If it is, various methods can easily be adopted for membrane-formation or hollow fiber spinning and it is easy to produce an extremely thin asymmetric membrane of an integral structure with a support. To satisfy the above-mentioned requirement, not all polyimides or polyamides are suitable, but a copolyimide or copolyamide-imide having a composition as defined above is suitable.

The copolyimide having repeating units of formula (I) can easily be obtained, for exemple, as described in US-A-3,708,458 by reacting 3,3′,4,4′-benzophenone tetracarboxylic acid dianhydride with an appropriate molar ratio of 4,4′-methylenebisphenyl isocyanate (4,4′-diphenylmethane diisocyanate) and tolylene diisocyanate (2,4-isomer, 2,6-isomer or a mixture thereof) in a polar solvent. It is also possible to use a small amount of other diisocyanate compounds or other tetracarboxylic acid compounds.

In the copolyamide-imide used in the present invention, the repeating units of formula (II) are preferably present is an amount of from 70 to 90 mol% and the repeating units of formula (III) are preferably present in an amount of from 30 to 10 mol%.

The copolyamide-imide can be obtained easily by using the operations described in US-A-3,929,691, that is by reacting a mixture of trimellitic acid anhydride and isophthalic acid in a ratio of about from 10 to 90 mol%: about from 90 to 10 mol% and a substantially equivalent amount of 4,4′-methylbisphenyl isocyanate in a 100 mol% ratio in a polar solvent. A small amount of other diisocyanate compounds can also be used.

The solvent used for the polymerization and dissolution of the copolyimide and the copolyamide-imide is a polar organic solvent, for example dimethylformamide, dimethylacetamide, N-methylpyrrolidone, dimethylsulfoxide, dimethylsulfone, hexamethyl phosphoramide, tetramethyl urea or pyridine. They may be used in admixture. Dimethylformamide, dimethylacetamide and N-methylpyrrolidone are preferably used; more preferably dimethylformamide is used.

The polar organic solvent is preferably used for the polymerization described above in an amount such as to initially dissolve all of the reactants. The amount of the solvent used is adjusted depending on the viscosity of the copolyimide to be produced; the percentage by weight of the copolyimide, although not so important, is usually from 5 to about 35% by weight.

In view of the chemical resistance to other organic compounds present in the liquid mixture to be separated, the aromatic copolyimide and copolyamide-imide are excellent but not completely satisfactory. It is effective to insolubilize and improve the durability of a separation membrane once prepared by crosslinking by heating, electron ray irradiation or other methods. A material subjected to crosslinking treatment and insolubilization treatment after film-formation in this way may be used as the polymeric material in the present invention. Furthermore, other polymeric materials not hindering the membrane-formation, such as a heat stabilizer, membrane-formation stabilizer, post crosslinking reagent, anti oxidation stabilizer or plasticizer, may be added to the polymeric material, if used in an amount of not more than 50% by weight of the separation membrane. Various stabilizers can be used to improve the durability.

The inherent viscosity ($\eta$ inh) of the polyimide or copolyamide-imide is generally not less than 0.01 $m^3/kg$ (0.1 dl/g), more preferably from 0.03 to 0.4 $m^3kg$ (0.3 to 4 dl/g) (measured in N-methylpyrrolidone, 0.5% at 30°C).

The pervaporation membrane is a separation membrane that partitions a processing solution chamber and a permeation vapor chamber. It is of an asymmetric structure. It may be coated on a support film made of a different material. Various shapes can be used, such as sheet, spiral, tube on hollow fiber, depending on the use thereof.

The membrane can be produced by known methods, for example casting, roll coating or spin-coating of a

dope containing the copolyimide or copolyamide-imide and a polar organic solvent as a polymerization solvent therefor on a flat plate such as a glass plate, and making it into a hollow fiber as usually employed so as to enlarge the surface area.

It is also possible to cast on an appropriate porous backing material (including porous hollow fibers) to provide a support for the membrane. Any inert porous material can be used as the support so long that it does not hinder the passage of the permeation gas to the membrane and is not attached by, for example, the membrane material, solvent or coagulation solution.

Preferred supports are a metal mesh, porous ceramic, sintered glass, porous glass, sintered metal, paper and porous non-soluble plastics and non woven fabrics such as rayons, asbestos and porous polyimides. These materials have no concern with the separation but merely function as a support for the film.

Among the possible shapes for the separation membrane, hollow fibers have merit in that the effective membrane area per unit volume is increased and the mechanical strength to high pressure is excellent relative to the small thickness of the wall, in the case of applying pressure from the outside of the hollow fiber.

The asymmetric membrane may have a dense layer on the outer surface, inner surface or both the outer and the inner surfaces.

An asymmetric membrane having cavities of a finger type structure at an inside part between the outer surface and the inner surface is preferred. The cavities of the finger type structure are formed at an inside part between the inner surface and the outer surface of the hollow fiber, in one or a plurality of rows in the circumferential direction. When the cavities are formed in one row in a circumferential direction, the size of the cavity is, for example, such that the largest diameter of the cavity is less than the wall thickness of the hollow fiber, preferably from 99 to 1%, more preferably from 99 to 50%, of the wall thickness.

When the cavities are formed in two or more rows in a circumferential direction, the sum of the largest diameters of cavities on one identical diameter is less than the wall thickness, preferably, from 99 to 1%, more preferably from 99 to 50%, of the wall thickness. The smallest diameter of the cavity can be equal to or smaller than the largest diameter.

Since the portions other than the cavities of the finger type structure have a porous structure in which the average pore diameter varies in the thickness direction, it is possible to ignore substantially the permeation resistance in the membrane, thereby obtaining a sufficient permeation rate and mechanical strength.

A solution of the copolyimide and/or copolyamide-imide which is usually adjusted to a solids concentration of from 8 to 35% by weight, preferably from 15 to 30% by weight, may is used be used as the dope in the preparation of the membrane.

A thin membrane is formed from such a dope by casting or hollow fiber extrusion as described above.

The thin membrane is then immersed in a coagulating solution immediately or after evaporating a portion of the solvent from the thin membrane by heating in the atmosphere a from 20 to 150°C, preferably from 40 to 120°C, for from 2 to 300 s, preferably for from 10 to 180 s, more preferably for from 20 to 120 s.
Alternatively, a hot blow may be used at a temperature in the above range. This can vary the thickness of the surface dense layer in the structure of the assymetric membrane and the permeating performance of the film can easily be controlled.

The coagulating solution is selected from those having a preferred compatibility with the dope and having a low solubility to the copolyimide or copolyamide-imide described above (i.e. poor solvent). Examples are water, lower alcohols such as propanol, ketones such as acetone, ethylene glycol and aromatic compounds such as toluene, or a mixed liquid thereof. Water is preferably used in view of its economical advantage and in view of public pollution.

The temperature of the coagulating solution is preferably from 0 to 80°C, more preferably from 0 to 50°C.

Any known method may be used for coagulating the dope from which a portion of the solvent has been evaporated. For instance a composite membrane may be immersed in the coagulating solution described above, or a hollow fiber may be immersed in a coagulating solution.

The coagulated wet membrane is preferably air-dried or immersed in an alcohol or hydrocarbon to reduce the content of the solvent and the coagulation solution to a low concentration.

The solvent and the coagulating solution are then removed from the membrane by drying,usually at a temperature of less than 250°C. The temperature may be increased gradually from room temperature, or the temperature may be elevated in a plurality of steps. Too rapid drying is not preferred, for example because of foaming.

The drying temperature, time and the thickness of the coagulated wet membrane described above vary depending on the solvent, the amount of volatile components in the coagulated wet membrane; they may be determined properly in each case.

The membrane is applied with further heat treatment. The temperature of the heat treatment is not less than 250°C, and is preferably from 280°C to 500°C.

If the heat treatment temperature is less than 250°C, the separation ratio between the water and the water-soluble organic compound is lower. A membrane treated at a temperature of greater than 280°C shows less reduction in the separation ratio. The higher the temperature of the heat treatment of the membrane is, the more stable it is to high temperatures and high concentrations of organic compounds in the pervaporation process.

The heat treatment can be conducted for from several seconds to several tens of hours. A longer time is required if the heat treatment temperature is lower; it is preferred to conduct the treatment for a short time if the temperature is higher. A suitable heat treating time is selected depending on the temperature. In the case of a usual heat treating temperature of from 280 to 320°C, a time of 2 to 30 min is preferred. If the temperature is less than 250°C, it is generally difficult to obtain a separation film with high separation ratio even if the heat treatment time is long.

In addition, it is extremely effective to insolubilize and improve the durability of the membrane to improve the separating performance. The insolubilization method can be conducted by the heat treatment as described above, as well as by electron ray irradiation, chemical crosslinking or another method.

It is preferred that the copolyimide or copolyamide-imide membrane contains not less than 1% by weight, preferably from 3 to 90% by weight, of an insoluble component. The "insoluble component" is an insoluble component when the copolyimide or copolyamide-imide membrane is dissolved in dimethylformamide at a temperature of 25°C for 24 hours.

In the insolubilization, it is sufficient that only the substantial surface layer of the membrane be insolubilized. When only the surface layer as the active layer for the separation is treated at a high temperature for a short period of time, or the surface is insolubilized by electron ray irradiation, the content of the insoluble component is represented by the amount in the surface layer up to 10 μm thickness.

A membrane not having the drying treatment and heat treatment as described above has power separating performance for each type of gas, and strength such as tensile strenght and tensile elongation at break.

The porosity, pore shape and thickness of the dense layer can easily be varied depending on, for example, the concentration of the copolyimide or copolyamide-imide in the dope, type of solvent, combination of the solvent, addition of a swelling agent, evaporation conditions, heat treating conditions, types of coagulating agent and coagulating conditions.

However, since the copolyimide or copolyamide-imide dissolved at normal temperature in a polar organic solvent such as N,N-dimethylformamide, dimethylacetamide or N-methylpyrrolidone can easily provide a porous structure in a coagulant such as water without adding a swelling agent, there is no particular requirement for the addition of a swelling agent.

The thickness of the membrane is generally from about 0.01 to 1,000 μm, preferably from 10 to 500 μm.

To remove the water from a liquid mixture by pervaporation using the membrane, the liquid mixture may be continously supplied into a vessel containing the membrane, brought into contact with one side of the membrane and then continously discharged out of the vessel. The direction of the flow of the liquid mixture may be parallel to or perpendicular to the surface of the membrane. It is preferred to flow the mixture at a speed which is as high as possible in parallel with the surface of the membrane in order to prevent concentration polarization near the membrane surface. The liquid mixture is at atmospheric pressure or above. Although the temperature of the liquid mixture is not restricted, it is suitably from 30 to 150°C, preferably from 60 to 120°C, under pressure as required, in the case of an aqueous ethanol solution.

The other side of the membrane may be maintained at a reduced pressure by a reduced-pressure maintaining device such as a vacuum pump, or an inert gas may be flowed thereby keeping the partial pressure of the permeated component at a low pressure. To recover the pervaporated component, one or a plurality of cold traps or condensators may be disposed in a pipeway that connects the vessel and the reduced-pressure maintaining device. The prevaporated component is cooled to a temperature which is less than its condensation point and recovered.

The present invention is non further described in the Examples.

Reference Preparation Example 1

Using the procedures described in Example 4 of US-A-3,708,458, a copolyimide was produced from 3,3′,4,4′-benzophenone tetracarboxylic acid anhydride and a mixture containing 80 mol% of tolylene diisocyanate (mixture of about 80 mol% of 2,4-isomer and about 20 mol% of 2,6-isomer) and 20 mol% of 4,4′-diphenylmethane diisocyanate.

N,N′-dimethylformamide was used as the polymerization solvent and the resin concentration was 21% by weight.

By condensing, 25% by weight of a copolyimide resin solution was obtained.

The copolyimide had an intrinsic viscosity at 30°C (0.5% in dimethylformamide) of 0.06 $m^3/kg$ (0.6 dl/g).

Examples 1 - 8

The copolyimide solution obtained in Reference Preparation Example 1 was extruded at a constant flow rate (2.9 g/min) and, simultaneously, a solution comprising water and dimethylformamide mixed in a weight ratio of 50/50 as a core solution was extruded to the central portion of the hollow fiber at a constant flow rate from a nozzle for producing a hollow fiber. The thus formed hollow fiber product was introduced into a coagulation bath of water while taken up at a constant speed (5 m/min) with a 12 cm air gap, immersed for 8 and, further, immersed in water for 10 min. After air-drying for one day and night, it was then dried at 100°C for 30 min and then subjected to heat treatment at a temperature of from 200°C to 300°C for 13 min, and at 300°C for 17 min.

The thus obtained hollow fiber had an outer diameter of 680 μm and inner diameter of 356 μm.

Using the hollow fiber, a pervaporation test was conducted under the conditions shown in Table 1; the result is shown in Table 1.

The liquid permeation amount in Table 1 means the weight of the solution permeated through the film per unit film area and unit time, and is represented by kg/m²-hr.

The separation factor is defined by the following equation:

$$\text{Separation factor} = \frac{Yi / Yj}{Wi / Wj}$$

wherein

Wi: weight ratio of water in the supplied solution
Wj: weight ratio of the components other than water in the supplied solution
Yi: weight ratio of water in the permeated solution
Yj: weight ratio of the components other than water in the premeated solution

Furthermore, the proportion of the dimethylformamide-insoluble components in the hollow fiber was measured. As the measuring method, 1 g of the hollow fiber was immersed in 100 g of dimethylformamide, left for 20 hours and then stirred for 4 hours by a stirrer to dissolve the soluble components. The solution was filtered through filter paper to remove insoluble components to obtain a clear liquid filtrate. The solution was evaporated to dryness by distilling out dimethylformamide using a rotary evaporator. The solid residue was dried at 300°C for 30 min and the amount of the soluble components was measured after cooling. The content of the insoluble components was calculated by the difference with respect to the entire amount.

Content of the insoluble component (wt%) = 100 - soluble component content

The content of the insoluble components in the hollow fiber was 28 wt%.

Comparative Example 1

Pervaporation was conducted at 80°C using the hollow fiber obtained under the same spinning conditions as those in Examples 1 to 8 except for using heat treatment temperature of 200°C for 30 min, and using an aqueous solution containing 50 wt% concentration of ethanol as the feed solution. The content of the insoluble components in the hollow fiber was not higher than 0.5 wt%.

The result is shown in Table 1.

Examples 9 and 10

Pervaporation was conducted at 80°C using the hollow fiber obtained under the same spinning conditions as those in Examples 1 to 8 and using solutions with a mixing ratio of water/acetic acid (weight ratio) of 80/20 and 40/60 as the feed solutions.

The result is shown in Table 1.

Example 11

Pervaporation was conducted at 80°C using the hollow fiber obtained under the same spinning condition as those in Examples 1 to 8 and using solutions with a mixing ratio of water/formalin (weigh ratio) of 82.5/17.5 as the feed solution.

Example 12 to 17

The copolyimide solution obtained in Reference Preparation Example 1 was extruded at a constant flow rate (2.9 g/min) and, simultaneously, air as a core gas was introduced into the central portion of the hollow fiber

at a constant flow rate (0.58 ml/min) from a nozzle for producing a hollow fiber. The hollow fiber was introduced into a coagulation bath of water, immersed for 8 s and, further, immersed in water for 10 min in another bath while continuously taken up at a constant speed (4.5 m/min). After air-drying for one day and night, it was then dried at 100°C for 30 min and then subjected to heat treatment at a temperature of from 200°C to 300°C for 13 min and at 300°C for 17 min.

Using the hollow fiber, a pervaporation test was conducted under the conditions shown in Table 1.

The content of the insoluble components in the hollow fiber was 32 wt%.

The result of the measurement is shown in Table 1.

Examples 18 to 24

A pervaporation test was conducted under the conditions as shown in Table 1 by using the hollow fiber obtained under the same spinning condition as those in Examples 12 to 17 except that heat treatment was conducted at a temperature of 320°C for 14 min after elevating the temperature from 200°C to 320°C in 16 min, or at 260°C for 23 min after elevating the temperature from 200°C to 260°C in 7 min. The contents of the insoluble components in the hollow fiber treated at 320°C or 260°C were 60 wt% and 1.3 wt%, respectively.

The result is shown in Table 1.

Examples 25 to 27

A pervaporation test was conducted at 50°C, 70°C and 80°C using the hollow fiber membrane obtained under the same spinning conditions as those in Examples 12 to 17 except for elevating the temperature from 200°C to 320°C in 16 min and treating at 320°C, and using an aqueous 50 wt% solution of acetic acid as the supplied solution.

The result is shown in Table 1.

Example 28

The copolyimide solution obtained in Reference Preparation Example 1 was extruded at a constant flow rate (2.9 g/min) and, simultaneously, water was extruded at a constant flow rate as a core solution from a hollow fiber nozzle. Thus formed hollow fiber product was introduced with a 12 cm air gap into a coagulation solution of water while continuously taken up at a constant speed (4.8 m/min), kept for 8 s in the bath, and then immersed in water of another bath for 10 min. After air-drying for one day and night, it was then dried at 100°C for 30 min, and then heat treated at 300°C for 17 min after elevating the temperature from 200°C to 300°C in 13 min.

A pervaporation test was conducted at 80°C using the copolyimide hollow fiber obtained above and using an aqueous 80 wt% solution of ethanol as the supplied solution.

The result is shown in Table 1.

The content of the insoluble components of the hollow fiber was 37 wt%.

Table 1

| Example | Spinning condition | | | Pervaporation condition | | | Liquid permeation amount | Separation factor |
|---|---|---|---|---|---|---|---|---|
| | Core liquid composition (wt%) | Air gap (cm) | Heat treatment temperature (°C) | Water-soluble organic compound | Concentration (wt%) | Temperature (°C) | ($kg/m^2$-hr) | |
| 1 | Water/DMF = 50/50 | 12 | 300 | ethanol | 20 | 80 | 1.4 | 20 |
| 2 | " | " | " | " | 50 | 80 | 1.1 | 45 |
| 3 | " | " | " | " | 80 | 30 | 0.1 | 145 |
| 4 | " | " | " | " | 80 | 50 | 0.25 | 140 |
| 5 | " | " | " | " | 80 | 70 | 0.45 | 130 |
| 6 | " | " | " | " | 80 | 80 | 0.67 | 125 |
| 7 | " | " | " | " | 80 | 90 | 1.0 | 180 |
| 8 | " | " | " | " | 90 | 80 | 0.4 | 160 |
| Comparative Example 1 | " | " | 200 | " | 50 | 80 | 7.5 | 3 |
| 10 | " | " | 300 | acetic acid | 20 | 80 | 0.87 | 50 |
| 11 | " | " | " | " | 60 | 80 | 0.65 | 60 |
| 12 | " | " | " | formalin | 17.5 | 80 | 1.2 | 80 |

Table 1 (cont'd)

| Example | Spinning condition | | | Pervaporation condition | | | Liquid permeation amount | Separation factor |
|---|---|---|---|---|---|---|---|---|
| | Core liquid composition (wt%) | Air gap (cm) | Heat treatment temperature (°C) | Water-soluble organic compound | Concentration (wt%) | Temperature (°C) | ($kg/m^2$-hr) | |
| 12 | Air | 0 | 300 | ethanol | 50 | 80 | 1.7 | 425 |
| 13 | " | " | " | " | 80 | 50 | 0.3 | 820 |
| 14 | " | " | " | " | 80 | 70 | 0.8 | 845 |
| 15 | " | " | " | " | 80 | 80 | 1.2 | 680 |
| 16 | " | " | " | " | 95 | 80 | 0.48 | 1400 |
| 17 | " | " | " | " | 98 | 80 | 0.25 | 1110 |
| 18 | " | " | 320 | " | 50 | 80 | 0.22 | 1000 |
| 19 | " | " | " | " | 80 | 80 | 0.19 | 8800 |
| 20 | " | " | " | " | 95 | 80 | 0.09 | 5500 |
| 21 | " | " | 260 | " | 50 | 80 | 2.4 | 220 |
| 22 | " | " | " | " | 80 | 80 | 1.75 | 670 |
| 23 | " | " | " | " | 90 | 80 | 1.45 | 180 |

Table 1 (cont'd)

| Example | Spinning condition | | | Pervaporation condition | | | Liquid permeation amount ($kg/m^2$-hr) | Separation factor |
|---|---|---|---|---|---|---|---|---|
| | Core liquid composition (wt%) | Air gap (cm) | Heat treatment temperature (°C) | Water-soluble organic compound | Concentration (wt%) | Temperature (°C) | | |
| 24 | Air | 0 | 260 | ethanol | 95 | 80 | 0.8 | 180 |
| 25 | " | " | 320 | acetic acid | 50 | 50 | 0.08 | 120 |
| 26 | " | " | " | " | 50 | 70 | 0.16 | 410 |
| 27 | " | " | " | " | 50 | 80 | 0.25 | 830 |
| 28 | Water | 12 | 300 | ethanol | 80 | 80 | 0.9 | 400 |

Examples 29 to 34

A pervaporation test was conducted using hollow fibers obtained by the same spinning conditions as those in Examples 12 to 17 using a mixed solution of water/acetone, a mixed solution of water/tetrahydrofuran, a mixed solution of water/phenol, a mixed solution of water/acetonitrile, a mixed solution of water/formaldehyde and a mixed solution of water/ethyl acetate under the conditions shown in Table 2.

The result is shown in Table 2.

Table 2

| Example | Pervaporation condition | | | Liquid permeation amount ($kg/m^2$-hr) | Separation factor |
|---|---|---|---|---|---|
| | Water soluble organic compound | Concentration (wt%) | Temperature (°C) | | |
| 29 | Acetone | 20 | 55 | 0.82 | 9.1 |
| 30 | Tetrahydrofuran | 20 | 60 | 0.82 | 92.6 |
| 31 | Phenol | 8 | 80 | 0.07 | 5.8 |
| 32 | Acetonitrile | 20 | 70 | 1.1 | 2.8 |
| 33 | Formaldehyde | 17.5 | 80 | 1.2 | 45.3 |
| 34 | Ethyl acetate | 20 | 70 | 0.74 | 6.7 |

Reference Preparation Example 2

To a preliminarily dried 10 litre reactor, 614.82 g (3.20 mol) of trimellitic acid anhydride and 132.90 g (0.80 mol) of isophtahalic acid were fed. The reactor was equipped with a thermometer, a condenser, a stirrer and a hydrogen inlet.

1000.96 g (4.0 mol) 4,4'-methylenebisphenyl isocyanate (hereinafter referred to as MDI) was was added to a dried 5 litre bottle and then 434 ml of N-methylpyrrolidone (hereinafter referred to as NMP) was added to dissolve the MDI. The MDI solution was added to the above-mentioned reactor and then the bottle was rinsed with 3,650 ml of NMP. The solution was heated from 53°C to 170°C in a nitrogen atmosphere for 3 hours and 40 min with a stirring rate of 65 rpm and the reaction was further continued at 169 to 171°C for one hour and 55 min. The reaction mixture was a 25 wt% NMP solution of a copolyamide-imide in which 80 mol% of the repeating units had the formula:

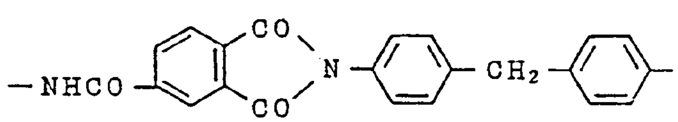

and 20 mol% thereof had the formula:

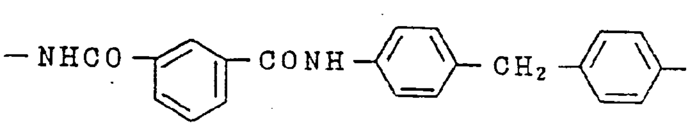

The inherent viscosity (η inh) of the copolyamide-imide at 30°C was 0.0603 $m^3/kg$ (0.603 dl/g) (in NMP, 0.5%).

The solution was added to methanol and the precipitated polymer was dried at 150°C for 3 hours to obtain a copolyamide-imide powder.

The copolyamide-imite powder was dissolved in dimethylformamide to obtain a 17 wt% solution as a dope for preparing a separation membrane.

## Membrane Preparation Example 1

After filtration, the copolyamide-imide solution prepared above was extruded through a hollow fiber nozzle at a constant flow rate (2.9 g/min) and, simultaneously, water, a solution of water/DMF = 50/50 (weight ratio) as the core liquid or air was extruded to form a hollow fiber composition. This composition was introduced into a water coagulating solution while continously taken up at a constant rate of 4.8 m/min with an air gap as shown in Table 2 and then immersed in the coagulating solution for 8 s. It was then immersed in a water bath for 10 min and air dried for one day and night, dried at 100°C for 30 min, and finally heat-treated under the conditions shown in Table 3. The result of the pervaporation test using these hollow fibers is shown in Table 3.

## Examples 35 to 50

Results of the pervaporation under the respective conditions using the hollow fibers prepared in Preparation Example 2 and Membrane Preparation Example 1 are shown in Table 3.

## Examples 51 to 54

The copolyamide-imide prepared in the Preparation Example 2 and benzophenone type copolyimide PI-2080 were mixed in 60 : 40 weight ratio and further formed into a 20 wt% solution of DMF. The solution was filtered to obtain a dope for use in hollow fiber spinning. A hollow fiber was formed therefrom as in Membrane Preparation Example 1. The result of the pervaporation test is shown in Table 3.

Table 3

| Example | Spinning condition | | | Pervaporation condition | | Liquid permeation amount ($kg/m^2$-hr) | Separation factor |
|---|---|---|---|---|---|---|---|
| | Core liquid composition | Air gap (cm) | Heat treatment temperature (°C) | Water-soluble organic compound (wt%) | Temperature (°C) | | |
| 35 | water | 12 | 275 | ethanol; 80 | 80 | 4.9 | 30 |
| 36 | | | 295 | | | 0.3 | 75 |
| 37 | | | 305 | | | 0.15 | 2000 |
| 38 | water/DMF (50/50 wt%) | 12 | 305 | ethanol; 50 | 80 | 1.0 | 50 |
| 39 | | | | 80 | | 0.5 | 100 |
| 40 | | | | 90 | | 0.4 | 140 |
| 41 | | | | acetic acid;20 | 80 | 0.7 | 30 |
| 42 | | | | 60 | 80 | 0.5 | 40 |
| 43 | air | 0 | 305 | ethanol; 50 | 80 | 1.2 | 100 |
| 44 | | | | 80 | | 0.8 | 500 |
| 45 | | | | 95 | | 0.3 | 800 |
| 46 | | | | 98 | | 0.1 | 600 |

Table 3 (cont'd)

| Example | Spinning condition | | | Pervaporation condition | | Liquid permeation amount | Separation factor |
|---|---|---|---|---|---|---|---|
| | Core liquid composition | Air gap (cm) | Heat treatment temperature (°C) | Water-soluble organic compound (wt%) | Temperature (°C) | ($kg/m^2$-hr) | |
| 47 | air | 0 | 305 | acetic acid; 20 | 80 | 0.03 | 80 |
| 48 | | | | 60 | | 0.1 | 200 |
| 49 | | | 320 | ethanol ; 50 | 80 | 0.15 | 150 |
| 50 | | | | 80 | | 0.1 | 800 |
| 51 | water/DMF (50/50 wt%) | 12 | 305 | ethanol ; 50 | 80 | 0.8 | 45 |
| 52 | | | | 80 | | 0.4 | 80 |
| 53 | | | | 90 | | 0.4 | 100 |
| 54 | air | 0 | 320 | ethanol ; 80 | 80 | 0.6 | 400 |

Examples 55 to 60

The pervaporation shown in Table 4 was carried out, using the same hollow fiber as used in Example 43. The result is shown in Table 4.

Table 4

| Example | Pervaporation condition | | Liquid permeation amount ($kg/m^2$-hr) | Separation factor |
|---|---|---|---|---|
| | water-soluble organic compound (wt%) | Temperature (°C) | | |
| 55 | acetone 20 | 55 | 0.75 | 10 |
| 56 | tetrahydrofuran 20 | 60 | 0.7 | 80 |
| 57 | phenol 8 | 80 | 0.05 | 5 |
| 58 | acetonitrile 20 | 70 | 1.0 | 3 |
| 59 | formaldehyde 17.5 | 80 | 1.1 | 35 |
| 60 | methyl acetate 20 | 70 | 0.7 | 5 |

Comparative Examples 2 and 3

A pervaporation test was conducted by using the hollow fiber obtained under the same spinning conditions as those in Examples 1 to 8 except for heat treating at 100°C and 200°C, and by using a mixed solution of water/acetic acid at a mixing ratio of 40/60 (weight ratio) as the supplied solution.

The result is shown in Table 5.

Table 5

| | Heat treatment temperature (°C) | Insoluble ingredient content (wt%) | Liquid permeation amount ($kg/m^2$-hr) | Separation factor |
|---|---|---|---|---|
| 2 | 100 | 0 | 5.0 | 1.5 |
| 3 | 200 | 0 | 2.6 | 2.2 |

Comparative Examples 4 to 6

Pervaporation and measurement of the content of insoluble ingredients were carried at 80°C using the hollow fiber obtained under the same spinning conditions as those in Examples 12 to 17 except for heat treating at a temperature shown in Table below and using a solvent of water/ethanol = 10/90 (weight ratio).

The result is shown in Table 6.

Table 6

| | Heat treatment temperature (°C) | Insoluble ingredient content (wt%) | Liquid permeation amount ($kg/m^2$-hr) | Separation factor |
|---|---|---|---|---|
| 4 | None (air drying product) | 0 | 5.5 | 3 |
| 5 | 150 | 0 | 5.4 | 5 |
| 6 | 220 | 0.5 | 1.5 | 20 |

Examples 61 to 68

Tests for the pervaporation and the insoluble component contents were carried out using the hollow fibers obtained by the same spinning conditions as those in Examples 12 to 17 except for treating at a temperature shown in the Table below and using a mixed solution of water/acetone, a mixed solution of water/acetonitrile, a mixed solution of water/acetic acid, a mixed solution of water/isopropyl alcohol and a mixed solution of water/n-hexane/isopropyl alcohol as the supplied solution under the conditions in Table 7.

The result is shown in Table 7.

Table 7

| Example | Heat treatment temperature for hollow thread (°C) | Insoluble ingredient content (wt%) | Pervaporation condition | | | Liquid permeation amount ($kg/m^2$-hr) | Separation factor |
|---|---|---|---|---|---|---|---|
| | | | Water soluble organic compound | Conc. (wt%) | Temperature (°C) | | |
| 61 | 325 | 67 | acetone | 95 | 55 | 0.095 | 55 |
| 62 | 330 | 82 | acetone | 95 | 55 | 0.044 | 5200 |
| 63 | 325 | 67 | acetonitrile | 50 | 40 | 0.048 | 170 |
| 64 | 320 | 62 | acetic acid | 80 | 80 | 0.31 | 560 |
| 65 | 310 | 38 | isopropyl alcohol | 90 | 80 | 0.785 | 5000 |
| 66 | 310 | 38 | " | 95 | 80 | 0.460 | 10000 |
| 67 | 310 | 38 | " | 98 | 80 | 0.174 | 15000 |
| 68 | 310 | 38 | n-hexane/ isopropyl alcohol | 91.7/7.9 | 60 | 0.16 | 6400 |

The separation method of the present invention can effectively separate water from a liquid mixture by a pervaporation method, and is useful as a separation method in various industries.

## Claims

1. A separation method for removing water from a liquid mixture by pervaporation, which comprises contacting the liquid mixture to one side of an asymmetric membrane while maintaining a gaseous phase on the other side of the membrane, the pervaporation being carried out at atmospheric pressure or above for the liquid mixture, the membrane having been heat treated at a temperature of not less than 250°C and said membrane comprising:

(i) at least 50% by weight of a copolyamide having repeating units of formula (I):

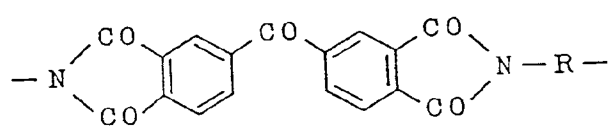

wherein R represents

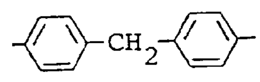

for from 10 to 30 mol% of said repeating units, and R represents

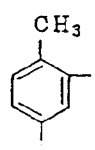

and/or

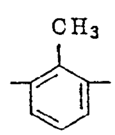

for from 90 to 70 mol% of said repeating units, or

(ii) at least 50% by weight of a copolyamide-imide comprising from 90 to 10 mol% of repeating units of formula (II):

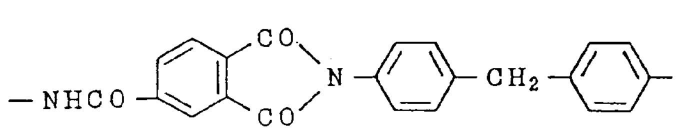

and from 10 to 90 mol% of repeating units of formula (III):

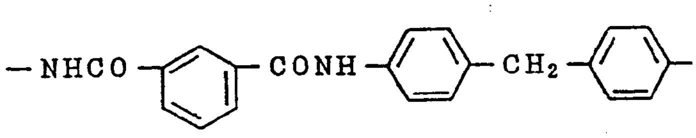

2. A method according to claim 1, wherein the heat treatment has been carried out at a temperature of from 280 to 500°C.

3. A method according to claim 1 or 2, wherein the membrane after the heat treatment contains dimethylformamide-insoluble components in an amount of not less than 1% by weight when the membrane is dissolved in dimethylformamide at a temperature of 25°C for 24 hours.

4. A method according to claim 3, wherein the membrane after the heat treatment contains the dimethylformamide-insoluble components in an amount of from 3 to 90% by weight.

5. A method according to any one of the preceding claims, wherein the liquid mixture is an aqueous solution of an oxygen-containing organic compound, a nitrogen-containing organic compound, an inorganic compound or a mixture thereof.

6. A method according to claim 5, wherein the oxygen-containing organic compound is an alcohol, phenol, ester, ketone, ether, aldehyde or organic acid.

7. A method according to claim 5 or 6, wherein the nitrogen-containing organic compound is a nitrile.

8. A method according to claim 5, 6 or 7 wherein the inorganic compound is an inorganic acid.

## Patentansprüche

1. Trennverfahren zur Entfernung von Wasser aus einem flüssigen Gemisch durch Pervaporation, wobei man das flüssige Gemisch mit einer Seite einer asymmetrischen Membran in Kontakt bringt, eine Gasphase auf der anderen Seite der Membran aufrechterhält, die Pervaporation für das flüssige Gemisch bei Atmosphärendruck oder darüber durchführt, und wobei die Membran bei einer Temperatur von nicht weniger als 250°C hitzebehandelt worden ist und die genannte Membran enthält:

(i) mindestens 50 Gew.% eines Copolyimids mit Wiederholungseinheiten der Formel (I):

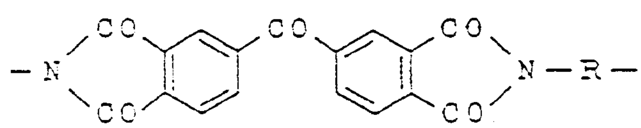

worin R

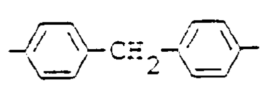

für 10 bis 30 Mol% der genannten Wiederholungseinheiten und

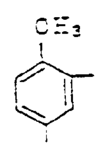

und/oder

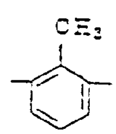

für 90 bis 70 Mol% dergenannten Wiederholungseinheiten darstellt, oder

(ii) mindestens 50 Gew.% eines Copolyamid-Imids, enthaltend 90 bis 10 Mol% Wiederholungseinheiten der Formel (II):

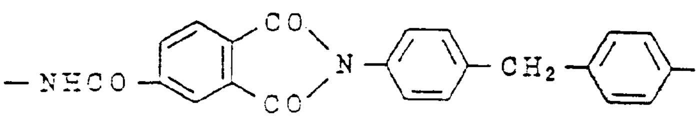

und 10 bis 90 Mol% Wiederholungseinheiten der Formel (III):

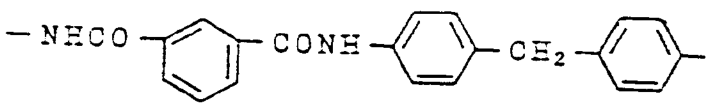

2. Verfahren gemäß Anspruch 1, wobei die Hitzebehandlung bei einer Temperatur von 280 bis 500°C durchgeführt wird.

3. Verfahren gemäß Anspruch 1 oder 2, wobei die Membran nach der Hitzebehandlung in Dimethylformamid unlösliche Bestandteile in einer Menge von nicht weniger als 1 Gew.% enthält, wenn die Membran in Dimethylformamid bei einer Temperatur von 25°C 24 h lang aufgelöst wird.

4. Verfahren gemäß Anspruch 3, wobei die Membran nach der Hitzebehandlung in Dimethylformamid unlösliche Bestandteile in einer Menge von 3 bis 90 Gew.% enthält.

5. Verfahren gemäß jedem der vorhergehenden Ansprüche, wobei das flüssige Gemisch eine wässrige Lösung einer sauerstoffhaltigen organischen Verbindung, einer stickstoffhaltigen organischen Verbindung, einer anorganischen Verbindung oder einer Mischung davon ist.

6. Verfahren gemäß Anspruch 5, wobei die sauerstoffhaltige organische Verbindung ein Alkohol, Phenol, Ester, Keton, Ether, Aldehyd oder eine organische Säure ist.

7. Verfahren gemäß Anspruch 5, wobei die stickstoffhaltige organische Verbindung ein Nitril ist

8. Verfahren gemäß Anspruch 5, wobei die anorganische Verbindung eine anorganische Säure ist.

## Revendications

1. Procédé de séparation pour éliminer l'eau d'un mélange liquide par pervaporation, qui comprend le contact du mélange liquide avec un côté d'une membrane asymétrique, en maintenant une phase gazeuse de l'autre côté de la membrane, la pervaporation étant effectuée à la pression atmosphérique ou au-dessus pour le mélange liquide, la membrane ayant subi un traitement thermique à une température d'au moins 250°C et ladite membrane comprenant :

(i) au moins 50 % en poids d'un copolyamide ayant des motifs répétés de formule (I):

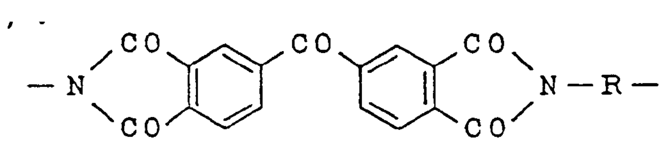

dans laquelle R représente

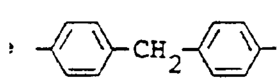

pour 10 à 30 % molaires desdits motifs répétés et R représente

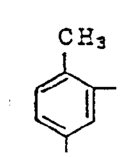

et/ou

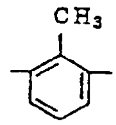

pour 90 à 70 % molaires desdits motifs répétés, ou

(ii) au moins 50 % en poids d'un copolyamide-imide comprenant de 90 à 10 % molaires de motifs répétée de formule (II) :

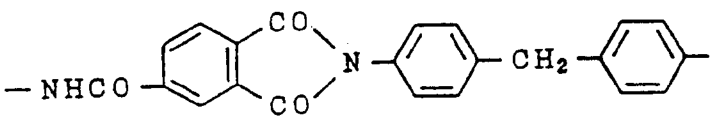

et de 10 à 90 % molaires de motifs répétée de formule (III) :

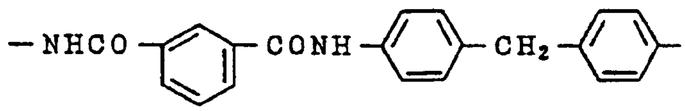

2. Procédé selon la revendication 1, dans lequel le traitement thermique a été réalisé à une température de 280 à 500°C.

3. Procédé selon la revendication 1 ou 2, dans lequel la membrane, après le traitement thermique, contient des composants insolubles dans le diméthylformamide en une proportion qui n'est pas inférieure à 1 % en poids lorsqu'on dissout la membrane dans le diméthylformamide à une température de 25°C pendant 24 heures.

4. Procédé selon la revendication 3, dans lequel la membrane, après le traitement thermique contient les composants insolubles dans le diméthylformamide en une proportion de 3 à 90 % en poids.

5. Procédé selon l'une quelconque des revendications précédentes, dans lequel le mélange liquide est une solution aqueuse d'un composé organique oxygéné, d'un composé organique azoté, d'un composé minéral ou d'un de leurs mélanges.

6. Procédé selon la revendication 5, dans lequel le composé organique oxygéné est un alcool, un phénol, un ester, une cétone, un éther, un aldéhyde ou un acide organique.

7. Procédé selon la revendication 5 ou 6, dans lequel le composé organique azoté est un nitrile.

8. Procédé selon la revendication 5, 6 ou 7, dans lequel le composé minéral est un acide minéral.